# EUROPÄISCHE PATENTSCHRIFT

(11) **EP 2 180 171 B1**
(45) Veröffentlichungstag und Bekanntmachung des Hinweises auf die Patenterteilung: **04.07.2012**
(21) Anmeldenummer: 09173507.6
(22) Anmeldetag: 20.10.2009
(51) Int. Cl.: F02G 5/02, F01K 23/06, F02M 25/07

(54) **System mit einem Rankine-Kreislauf**
System with a Rankine cycle
Système doté d'un circuit Rankine

(30) Priorität: 04.02.2009 DE 102009007555; 24.10.2008 DE 102008053067
(43) Veröffentlichungstag der Anmeldung: 28.04.2010
(73) Patentinhaber: Behr GmbH & Co. KG, 70469 Stuttgart (DE)
(72) Erfinder: Pantow, Eberhard, 71364 Winnenden (DE); Grünwald, Jürgen, 71638 Ludwigsburg (DE)
(74) Vertreter: Grauel, Andreas

(56) Entgegenhaltungen:
- EP-A- 1 326 009
- EP-A- 1 455 074
- EP-A- 2 110 634

## Beschreibung

Die Erfindung betrifft ein System, insbesondere für Kraftfahrzeuge, aufweisend ein Abgassystem und einen Rankine-Kreislauf nach dem Oberbegriff des Anspruchs 1 sowie ein Betriebsverfahren für ein solches System.

Zunehmend wird der Einsatz von Systemen zur Wärmerückgewinnung, etwa von Clausius-Rankine Prozessen, angedacht.

Der Clausius-Rankine Prozess ist als geschlossener Dampfkraftprozess bekannt. Eine Flüssigkeit oder ein Flüssigkeitsgemisch wird unter Druck verdampft, in der Regel auch überhitzt und einer Expansionsmaschine zugeführt, die mechanische Arbeit leistet. Das entspannte Arbeitsmittel wird unter Wärmeabgabe vollständig kondensiert und mittels Pumpe wieder auf Verdampfungsdruck gebracht. Es wurde bereits angedacht, diese Technologie in Kraftfahrzeugen einzusetzen, um einen Teil der Abwärme aus der Verbrennung in mechanische Arbeit zu verwandeln. Letztere kann beispielsweise dem Antriebsstrang oder einem elektrischen Generator zugeführt werden. JP 2007332853 A offenbart ein Abwärmerückgewinnungssystem, wobei genau ein Heizer die vom Abgas eines Verbrennungsmotors aufgenommene Abwärme an einen Rankine Kreislauf abgibt. Das Medium im Rankine Kreislauf verdampft und expandiert anschließend in einer Expansionsmaschine, um thermische in mechanische Energie umzuwandeln.

Es ist die Aufgabe der Erfindung, ein System mit einem Rankine-Kreislauf anzugeben, bei dem die Nutzung der Wärme eines Abgassystems optimiert ist.

Diese Aufgabe wird für ein eingangs genanntes System erfindungsgemäß mit den kennzeichnenden Merkmalen des Anspruchs 1 gelöst. Durch die thermische Koppelung von Abgas und Arbeitsmittel über zumindest zwei Wärmetauscher ist die Übertragung der Wärme optimierbar, etwa im Hinblick auf eine Vergleichmäßigung der Wärmekapazitätenströme von Abgas und Arbeitsmittel. Insbesondere kann hierdurch der Änderung der erforderlichen Wärmekapazitätenströme in den Bereich Vorwärmung, Verdampfung und Überhitzung des Arbeitsmittels Rechnung getragen werden.

In der Erfindung verzweigt ein gesamter Abgasstrom des Abgassystems in einen rückgeführten Abgasstrom und einen Restabgasstrom. Eine solche Verzweigung liegt im Allgemeinen bei modernen Verbrennungsmotoren vor, bei denen insbesondere hohe Anforderungen an die Schadstoffemission gestellt werden. Die verzweigten Abgasströme, von denen insbesondere der rückgeführte Abgasstrom regelmäßig gekühlt wird, sind in besonderer Weise zur Optimierung der thermischen Anbindung eines Rankine-Kreislaufs geeignet. In bevorzugter Detailgestaltung zweigt dabei der rückgeführte Abgasstrom hochdruckseitig eines Abgas-Ladeluftverdichters ab. Bei einer solchen Hochdruck-Abgasrückführung steht eine besonders große Wärmemenge des rückgeführten Abgases zur Einbringung in das Arbeitsmittel vor.

Bei der Erfindung ist der rückgeführte Abgasstrom in seiner Strömungsrichtung thermisch mit einem Überhitzungsbereich, nachfolgend einem Verdampfungsbereich und nachfolgend einem Vorwärmbereich des Arbeitsmittels koppelbar. Eine solche Gegenstrom-Anordnung von Arbeitsmittel und Abgas begünstigt einen gleichmäßige Temperaturdifferenz über den gesamten Bereich der thermischen Kopplung.

Der Restabgasstrom ist mit einem Verdampfungsbereich nur mit dem Verdampfungsbereich des Arbeitsmittels koppelbar. In dem Verdampfungsbereich erfolgt, im Unterscheid zum Vorwärm- und Überhitzungsbereich, eine Phasenumwandlung des Arbeitsmittels, weshalb hier regelmäßig ein großer Bedarf an Wärmekapazität des Abgasstroms vorliegt. Daher ist es besonders günstig, in diesen Bereich durch die Wärme des Restabgasstroms zu unterstützen, um das Gesamtsystem zu optimieren. Es kann dabei vorgesehen sein, den Restabgasstrom nur mit dem Verdampfungsbereich und nicht mit Überhitzungs- oder Vorwärmbereich zu koppeln, um eine zu starke Abkühlung des Restabgases zu vermeiden. Bei einer übermäßigen Abkühlung des Restabgases besteht allgemein die Problematik einer Taupunktunterschreitung bzw. Kondensation von korrosiven Stoffen.

Weiterhin vorteilhaft erfolgt in dem ersten Wärmeübertrager eine Vorwärmung des Arbeitsmediums des Rankine-Kreislaufs, wobei in dem zweiten Wärmeübertrager eine Verdampfung des Arbeitsmediums erfolgt. Besonders bevorzugt kann dabei vorgesehen sein, dass in einem dritten Wärmeübertrager eine Überhitzung des Arbeitsmediums erfolgt. Auf diese Weise sind die Abschnitte Vorwärmung, Verdampfung und Überhitzung des Arbeitsmittels auf mehrere, für ihre Aufgabe optimierbare Wärmetauscher verteilt, die zudem jeweils mit verschiedenen Zweigen des Abgassystems thermisch verkoppelt sein können. Bei einer vorteilhaften Ausführungsform hat dabei der zweite Wärmeübertrager einer ersten Abschnitt, der von dem rückgeführten Abgasstrom durchströmbar ist und einen zweiten Abschnitt, der von dem Restabgasstrom durchströmbar ist, so dass die große Wärmekapazitäten erfordernde Verdampfung über mehrere Abgas-Teilströme getrieben ist. Zur vorteilhaften Optimierung ist zudem ein Gesamtstrom des Arbeitsmittels über einen Abzweig, insbesondere einen regelbar stellbaren Abzweig, auf die Abschnitte des zweiten Wärmeübertragers aufteilbar. Hierdurch kann den verschiedenen Wärmekapazitäten der Abgas-Teilströme Rechnung getragen werden, wobei über einen regelbar stellbaren Abzweig auch eine laufende Anpassung an verschiedene Betriebsbedingungen erfolgen kann. Der Abzweig kann dabei etwa als ein elektronisch angesteuertes, zum Beispiel getaktetes, 3-Wege-Ventil ausgebildet sein.

Bei einer möglichen Ausführungsform der Erfindung sind die Wärmetauscher als integrierte Baueinheit ausgebildet. Alternativ können sie aber auch als separate Wärmetauscher ausgeformt sein oder es können beim Vorliegen von drei Wärmetauschern zwei der drei Tauscher integriert ausgebildet sein.

Die Aufgabe der Erfindung wird zudem durch ein Betriebsverfahren für ein erfindungsgemäßes System mit den Merkmalen des Anspruchs 10 gelöst. Die unterschiedlichen Kopplungen der Abgasströme je nach Vorwärmungs-, Verdampfungs- oder Überhitzungsbereich des Arbeitsmittels wird den Erfordernissen der verschiedenen Wärmekapazitätsströme Rechnung getragen, wobei dies baulich durch das Vorsehen von zumindest zwei Wärmeübertragern ermöglicht ist. Die Wärmeübertrager sind dabei im Sinne der Erfindung als funktionel hinsichtlich der thermischen Anbindung an verschiedene Abgasströme zu verstehen und müssen nicht notwendig baulich getrennte Einheiten sein. Je nach Anforderungen können die Wärmetauscher aber auch baulich getrennte Einheiten sein.

Eine vorteilhafte Vergleichmäßigung der Temperaturdifferenzen über die Austauschstrecke wird erreicht, indem der rückgeführte Abgasstrom in der Reihenfolge Überhitzen-Verdampfen-Vorwärmen in thermischen Austausch mit dem Arbeitsmittel gebracht wird.

Insbesondere vorteilhaft erfolgt in zumindest einem, insbesondere beiden der Bereiche Überhitzen oder Vorwärmen des Arbeitsmittels eine thermische Koppelung nur mit dem rückgeführten Abgasstrom. Hierdurch wird eine übermäßige Abkühlung des Restabgases vermieden.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt eine Darstellung der Temperatur von im Wärmetausch ste- hendem Abgas und Arbeitsmittel nach dem Stand der Technik, aufgetragen über dem Enthalpiestrom.
- Fig. 2: zeigt eine Darstellung wie in Fig. 1 für ein erfindungsgemäßes System.
- Fig. 3: zeigt eine schematische Darstellung eines erfindungsgemäßen Systems.
- Fig. 4: zeigt eine erste Variante eines Wärmetauschers im Verdamp- fungsbereich des Arbeitsmittels.
- Fig. 5: zeigt eine zweite Variante eines Wärmetauschers im Verdamp- fungsbereich des Arbeitsmittels.

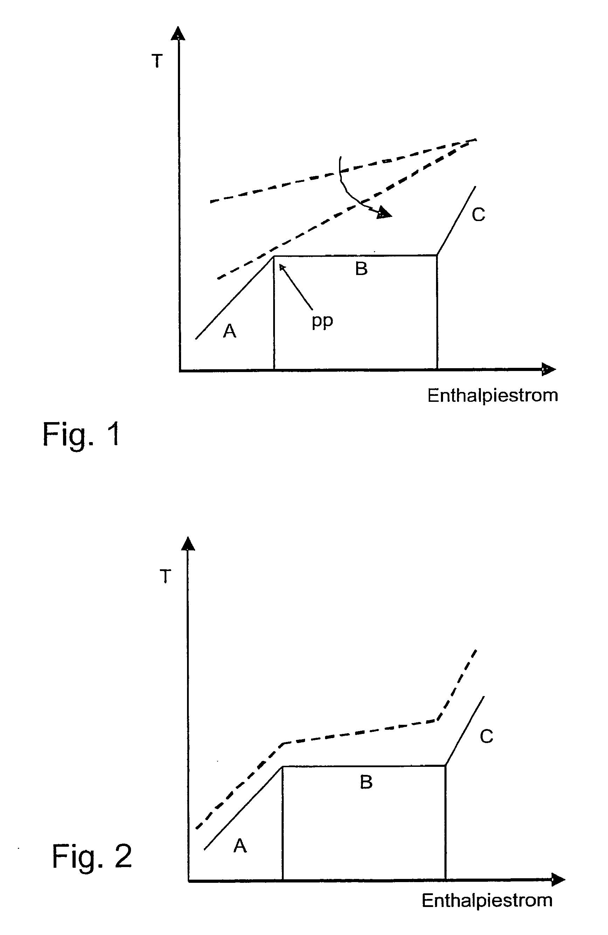

Ganz allgemein sind in den Zeichnungen Fig. 1 bis Fig. 5 die Ströme des Arbeitsmittels des Rankine-Kreislaufs mit durchgezogenen Linien und Abgasströme mit unterbrochenen Linien dargestellt.

Fig. 1 und Fig. 2 veranschaulichen zunächst das Konzept der Erfindung unter thermodynamischen Aspekten. Fig. 1 zeigt dabei eine herkömmliche Gegenüberstellung der Enthalpieströme von Arbeitsmittel und Temperatur, also zum Beispiel im Fall eines einzelnen Wärmetauschers und eines einzelnen Abgasstroms. In diesem Fall entspricht der Temperatur-Enthalpie-Verlauf des Abgases im Wesentlichen einer Geraden, wobei sich in der Kurve des Arbeitsmittels die drei Abschnitte Vorwärmung (flüssige Phase) A, Verdampfung (Phasenumwandlung) B und Überhitzung (Dampf/Gasphase) C finden.

Die beiden Kurven zum Abgasstrom zeigen die Veränderung in Richtung größerer Massenströme des Arbeitsmittels. Es wird hieraus ersichtlich, dass der Beginn des Siedens des Arbeitsmittel, vorliegend "Pinch Point" pp genannt, die Limitierung für den maximalen Massenstrom des Arbeitsmittels darstellt, selbst wenn die Abgas-Austrittstemperatur noch erheblich über über der Eintrittstemperatur des Rankine-Mediums liegt. Somit ist eine schlechte Ausnutzung der Wärmequelle gegeben. Zudem ist für die Überwindung des Bereichs an und nach dem Pich Point pp eine große Wärmeübertragungsfläche erforderlich.

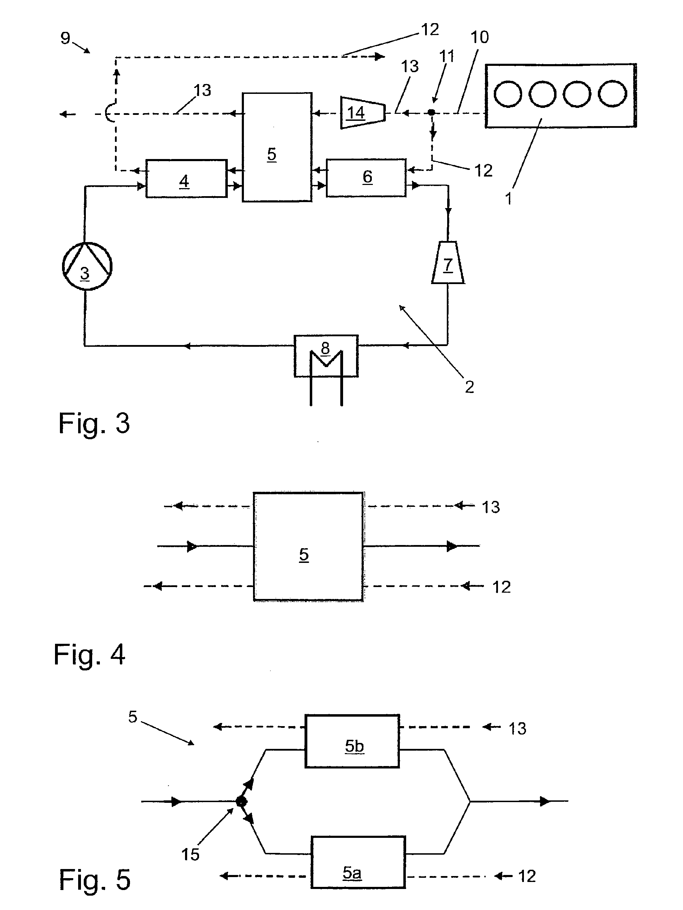

In Fig. 2 zeigt die Kurve des Abgases einen zweifach geknickten und somit an die Kurve des Arbeitsmittels deutlich angepassten Verlauf, wobei insbesondere die Temperaturdifferenz zwischen Abgas und Arbeitsmittel wesentlich gleichmäßiger ist als in Fig. 1. Dies wird vor allem dadurch erreicht, dass der Abgasstrom im Bereich B der Verdampfung des Arbeitsmittels eine höhere gesamte Wärmekapazität aufweist. Konkret wird dies durch Nutzung der Wärme eines weiteren Abgas-Teilstroms realisiert, wie aus nachfolgender Beschreibung des System gemäß Fig. 3 hervorgeht.

Fig. 3 zeigt ein erfindungsgemäßes System, bei dem die Abwärme eines Verbrennungsmotors 1 genutzt wird, um über einen Rankine-Kreislauf 2 in mechanische Energie umgesetzt zu werden. Hierdurch kann die Gesamtenergiebilanz verbessert werden. Der Rankine-Kreislauf ist besonders geeignet, zum Beispiel einen elektrischen Generator anzutreiben.

Der Rankine-Kreislauf, dessen Strömungsrichtung durch Pfeile angedeutet ist, umfasst eine Pumpe 3, einen als Vorwärmer ausgebildeten ersten Wärmetauscher 4, einen als Verdampfer ausgebildeten zweiten Wärmetauscher 5 und einen als Überhitzer ausgebildeten dritten Wärmetauscher 6. Nach der Überhitzung tritt das Arbeitsmittel des Kreislaufs, zum Beispiel Wasser, in einen Expander 7 ein, in dem die mechanische Arbeit verrichtet wird. Nach dem Expander 7 durchläuft das Arbeitsmittel einen Kondensator 8, in dem es kondensiert um dann wieder zu der Pumpe 3 zu strömen.

Die Wärmetauscher 4, 5, 6 sind jeweils an ein Abgassystem 9 des Verbrennungsmotors 1 gekoppelt. Das Abgassystem 9 umfasst einen gesamten den Verbrennungsmotor verlassenden Abgasstrom 10, der in einem Abzweig 11 in einen insbesondere seiner Größe nach regelbaren rückgeführten Abgasstrom 12 und einen Restabgasstrom 13 verzweigt.

Der rückgeführte Abgasstrom druchströmt zunächst den Überhitzer 6, dann den Verdampfer 5 und nachfolgend den Vorwärmer 4, wobei jeweils Wärme an das Arbeitsmittel abgegeben wird. Entsprechend der Reihenfolge dieser Stufen ist der rückgeführte Abgasstrom im Gegenstrom an das Arbeitsmittel angekoppelt. zweckmäßig erfolgt auch innerhalb der Wärmetauscher die Ankopplung im Gegenstromverfahren.

Nach den Wärmetauschern 4, 5, 6 wird der gekühlte rückgeführte Abgasstrom der Ladeluft des Verbrennungsmotors 1 zugeführt, wodurch sich zum Beispiel insbesondere bei Dieselmotoren eine Schadstoffreduzierung erzielen lässt.

Der Restabgasstrom 13 durchströmt nach dem Abzweig 11 zunächst einen Abgas-Ladeluftverdichter 14, vorliegend nach Art eines Abgas-Turboladers, wodurch bereits eine erste Expansion und Abkühlung des Restabgasstroms 13 erfolgt.

Nach dem Turbolader 14 wird der Restabgasstrom separat von dem rückgeführten Abgasstrom 12, aber ebenfalls unter thermischer Ankopplung durch den Verdampfer 5 geführt. Hierdurch steht eine größere Wärmekapazität zur Verdampfung des Arbeitsmittels zur Verfügung.

Um eine zu starke Abkühlung des Restabgasstroms 13, etwa mit der Folge einer Taupunktsunterschreitung, zu vermeiden, ist der Restabgasstrom 13 insbesondere nicht durch den Überhitzer 6 und nicht durch den Vorwärmer 4 geführt.

Grundsätzlich können die Wärmetauscher 4, 5, 6 separat ausgebildet sein oder zwei der Wärmetauscher 4, 5, 6 oder auch alle drei Wärmetauscher können als baulich integrierte Einheit ausgebildet sein. Für Ausführungsformen wäre zum Beispiel eine Sandwich-Bauweise denkbar, wobei Kanäle für das Rankine-Medium und abgasführende Kanäle einander abwechseln.

Fig. 4 zeigt eine erste mögliche Ausgestaltung des Verdampfers 5, bei der die beiden Abgasteilströme 12, 13 getrennt voneinander durch den gleichen Wärmetauscher geführt sind. Regelmäßig liegt hierbei eine feste Verteilung des Arbeitsmittels auf die beiden Abgasteilströme vor.

Bei der Ausführungsform nach Fig. 5 ist der Verdampfer zumindest funktionell in einen ersten Abschnitt 5a, der von dem rückgeführten Abgasstrom 12 durchströmt wird, und einen zweiten Abschnitt 5b, der von dem Restabgasstrom 13 durchströmt wird. Das Arbeitsmittel wird von einem stellbaren Abzweig in Form eines regelbaren Drei-Wege-Ventils 15 auf die beiden Wärmetauscherabschnitte 5a, 5b verteilt. Hierdurch kann je nach Betriebsbedingungen ein optimaler Wärmetausch sichergestellt werden.

Nachfolgend werden Daten für ein simuliertes erfindungsgemäßes System im Vergleich zu einem System nach dem Stand der Technik verglichen:

Betriebspunkt (Nutzfahrzeug der zukünftigen Euro 6-Norm:
- mittlere Drehzahl, mäßige Last
- Abgastemperatur nach Verbrennungsmotor: 418 °C
- gesamter Abgasmassenstrom: 361 g/s
- Rate rückgeführten Abgases: 32%
- Restabgastemperatur nach Turbolader unter Annahme realistischer Wärmeverluste: 288 °C

Es wird bei den Simulationen darauf geachtet, dass der Flüssigkeitsanteil des Arbeitsmittels bei Eintritt in den Expander null beträgt und maximal 0,1 (10%) bei Expanderaustritt.

System nach dem Stand der Technik (nur ein Wärmetauscher, beide Abgasteilströme sind thermisch an Vorwärmung, Verdampfung und Überhitzung gekoppelt):
Technische Leistung Expander (isentroper Wirkungsgrad=0,7): 8,5 kW Temperatur des rückgeführten Abgasteilstromes nach der Kühlung (Wärme nur zu Gunsten des Rankine-Cycle, zusätzliche Wärme wird nicht abgeführt): 190°C
Temperatur Restabgas nach Wärmeabgabe an den Kreislauf: 237 °C
Kondensationstemperatur: 83 °C

System gemäß der Erfindung (siehe Fig. 3):
Technische Leistung Expander (isentroper Wirkungsgrad=0,7): 8,8 kW Temperatur des rückgeführten Abgasteilstromes 12 nach der Kühlung (Wärme nur zu Gunsten des Rankine-Cycle, zusätzliche Wärme wird nicht abgeführt): 156°C
Temperatur Restabgas nach Wärmeabgabe an den Kreislauf: 250 °C Kondensationstemperatur: 80 °C

Zusammenfassend kann festgestellt werden, dass der AGR-Kühler (als Funktionseinheit) im erfindungsgemäßen System bei vergleichbarer Leistungsausbeute des Rankine-Kreislaufs im Beispiel etwa 4 kW zusätzliche Wärme abführt. Dementsprechend reduziert sich die Leistungsaufnahme aus dem Restabgas.

## Patentansprüche

1. System, insbesondere für ein Kraftfahrzeug, umfassend
ein Abgassystem (9) eines Verbrennungsmotors (1), insbesondere mit einer Abgasrückführung, und
einen Rankine-Kreislauf (2) mit einem Arbeitsmedium,
wobei das Abgassystem (9) thermisch an den Rankine-(2) Kreislauf koppelbar ist, wobei das Abgassystem (9) über einen ersten Wärmeübertrager (4, 5, 6) und zumindest einen zweiten Wärmeübertrager (4, 5, 6) thermisch an den Rankine-Kreislauf (2) koppelbar ist, wobei ein gesamter Abgasstrom (10) des Abgassystem (9) in einen rückgeführten Abgasstrom (12) und einen Restabgasstrom (13) verzweigt, **dadurch gekennzeichnet, dass** der rückgeführte Abgasstrom (12) in seiner Strömungsrichtung thermisch mit einem Überhitzungsbereich (6), nachfolgend einem Verdampfungsbereich (5) und nachfolgend einem Vorwärmbereich (4) des Arbeitsmittels koppelbar ist und der Restabgasstrom (13) nur mit dem Verdampfungsbereich (5) des Arbeitsmittels koppelbar ist.

2. System nach Anspruch 1, **dadurch gekennzeichnet, dass** der rückgeführte Abgasstrom (13) hochdruckseitig eines Abgas-Ladeluftverdichters (14) abzweigt.

3. System nach einem der Ansprüche 1 oder 2, **dadurch gekennzeichnet, dass** in dem ersten Wärmeübertrager (4) eine Vorwärmung des Arbeitsmediums des Rankine-Kreislaufs erfolgt, wobei in dem zweiten Wärmeübertrager (5) eine Verdampfung des Arbeitsmediums erfolgt.

4. System nach Anspruch 3, **dadurch gekennzeichnet, dass** in einem dritten Wärmeübertrager (6) eine Überhitzung des Arbeitsmediums erfolgt.

5. System nach Anspruch 3 oder 4, **dadurch gekennzeichnet, dass** der zweite Wärmeübertrager (5) einer ersten Abschnitt (5a) aufweist, der von dem rückgeführten Abgasstrom (12) durchströmbar ist und einen zweiten Abschnitt (5b), der von dem Restabgasstrom (13) durchströmbar ist.

6. System nach Anspruch 5, **dadurch gekennzeichnet, dass** ein Gesamtstrom des Arbeitsmittels über einen Abzweig (15), insbesondere einen regelbar stellbaren Abzweig, auf die Abschnitte (5a, 5b) des zweiten Wärmeübertragers (5) aufteilbar ist.

7. System nach einem der vorhergehenden Ansprüche, **dadurch gekennzeichnet, dass** die Wärmetauscher (4, 5, 6) als integrierte Baueinheit ausgebildet sind.

8. Verfahren zum Betrieb eines Systems nach einem der vorhergehenden Ansprüche, umfassend die Schritte:
- Vorwärmen des Arbeitsmittels durch thermische Kopplung an einen rückgeführten Abgasstrom (12) des Abgassystems;
- Verdampfen des Arbeitsmittels durch thermische Kopplung an den rückgeführten Abgasstrom (12) und einen Restabgasstrom (13) des Abgassystems;
- Überhitzen des Arbeitsmittels durch thermische Kopplung an den rückgeführten Abgasstrom (12), **dadurch gekennzeichnet, dass** der Restabgasstrom (13) nur mit dem Verdampfungsbereich (5) des Arbeitsmittels gekoppelt wird.

9. Verfahren nach Anspruch 8, **dadurch gekennzeichnet, dass** der rückgeführte Abgasstrom (12) in der Reihenfolge Überhitzen-Verdampfen-Vorwärmen in thermischen Austausch mit dem Arbeitsmittel gebracht wird.

10. Verfahren nach Anspruch 8 oder 9, **dadurch gekennzeichnet, dass** in zumindest einem, insbesondere beiden der Bereiche Überhitzen oder Vorwärmen des Arbeitsmittels eine thermische Koppelung nur mit dem rückgeführten Abgasstrom (12) erfolgt.

## Claims

1. A system, in particular for a motor vehicle, comprising an exhaust system (9) of an internal combustion engine (1), in particular having an exhaust recirculation, and a Rankine circuit (2) having an operating medium, the exhaust system (9) being able to be thermally coupled to the Rankine circuit (2), the exhaust system (9) being able to be thermally coupled to the Rankine circuit (2) via a first heat exchanger (4, 5, 6) and at least one second heat exchanger (4, 5, 6), a total exhaust stream (10) of the exhaust system (9) branching into a recirculated exhaust stream (12) and a residual exhaust stream (13), **characterized in that** the recirculated exhaust stream (12) can be thermally coupled in its flow direction to a superheating region (6), subsequently a vaporization region (5), and subsequently a preheating region (4) of the operating medium, and the residual exhaust stream (13) can only be coupled to the vaporization region (5) of the working medium.

2. The system according to claim 1, **characterized in that** the recirculated exhaust stream (13) branches off on the high-pressure side of an exhaust gas charge air compressor (14).

3. The system according to one of claims 1 or 2, **characterized in that** preheating of the operating medium of the Rankine circuit occurs in the first heat exchanger (4), vaporization of the operating medium occurring in the second heat exchanger (5).

4. The system according to claim 3, **characterized in that** superheating of the operating medium occurs in a third heat exchanger (6).

5. The system according to claim 3 or 4, **characterized in that** the second heat exchanger (5) has a first section (5a), through which the recirculated exhaust stream (12) can flow, and a second section (5b), through which the residual exhaust stream (13) can flow.

6. The system according to claim 5, **characterized in that** a total stream of the operating medium can be allocated via a branch (15), in particular a controllable adjustable branch, to the sections (5a, 5b) of the second heat exchanger (5).

7. The system according to one of the preceding claims, **characterized in that** the heat exchangers (4, 5, 6) are implemented as an integrated module.

8. A method for operating a system according to one of the preceding claims, comprising the following steps:
a preheating the operating medium by thermal coupling to a recirculated exhaust stream (12) of the exhaust system;
- vaporizing the operating medium by thermal coupling to the recirculated exhaust stream (12) and a residual exhaust stream (13) of the exhaust system;
- superheating the operating medium by thermal coupling to the recirculated exhaust stream (12), **characterized in that** the residual exhaust stream (13) is only coupled to the vaporization region (5) of the operating medium.

9. The method according to clam 8, **characterized in that** the recirculated exhaust stream (12) is brought into thermal exchange with operating medium in the sequence superheating-vaporizatirn-preheating.

10. The method according to claim 8 or 9, **characterized in that** thermal coupling only with the recirculated exhaust stream (12) occurs in at least one, in particular both of the regions superheating or preheating of the operating medium.

## Revendications

1. Système, en particulier pour un véhicule automobile, comprenant
un système de gaz d'échappement (9) d'un moteur à combustion interne (1), comportant en particulier un recyclage des gaz d'échappement, et
un circuit Rankine (2) comportant un milieu de travail, ou le système de gaz d'échappement (9) peut être couplé thermiquement au circuit Rankine (2), où le système de gaz d'échappement (9) peut être couplé thermiquement au circuit Rankine (2) via un premier échangeur de chaleur (4, 5, 6) et au moins via un deuxième échangeur de chaleur (4, 5, 6), où un flux total (10) de gaz d'échappement du système de gaz d'échappement (9) se ramifie en un flux de gaz d'échappement recyclés (12) et en un flux de gaz d'échappement résiduels (13),
**caractérisé en ce que** le flux de gaz d'échappement recyclés (12) peut être couplé thermiquement, suivant sa direction d'écoulement, à une zone de surchauffage (6), puis à une zone d'évaporation (5) et enfin à une zone de préchauffage (4) du milieu de travail, et le flux de gaz d'échappement résiduels (13) peut être couplé seulement à la zone d'évaporation (5) du milieu de travail.

2. Système selon la revendication 1, **caractérisé en ce que** le flux de gaz d'échappement recyclés (13) se ramifie côté haute pression d'un compresseur d'air de suralimentation / de gaz d'échappement (14).

3. Système selon l'une des revendications 1 ou 2, **caractérisé en ce qu'**un préchauffage du milieu de travail du circuit Rankine se produit dans le premier échangeur de chaleur (4), une évaporation du milieu de travail se produisant dans le deuxième échangeur de chaleur (5).

4. Système selon la revendication 3, **caractérisé en ce qu'**un surchauffage du milieu de travail se produit dans un troisième échangeur de chaleur (6).

5. Système selon la revendication 3 ou 4, **caractérisé en ce que** le deuxième échangeur de chaleur (5) présente une première partie (5a) qui peut être traversée par le flux de gaz d'échappement recyclés (12), et une deuxième partie (5b) qui peut être traversée par le flux de gaz d'échappement résiduels (13).

6. Système selon la revendication 5, **caractérisé en ce qu'**un flux total du milieu de travail peut être réparti sur les parties (5a, 5b) du deuxième échangeur de chaleur (5) via une ramification (15), en particulier une ramification prouvant être positionnée de façon réglable.

7. Système selon l'une quelconque des revendications précédentes, **caractérisé en ce que** les échangeurs de chaleur (4, 5, 6) sont conçus comme un ensemble unitaire intégré.

8. Procédé pour le fonctionnement d'un système selon l'une quelconque des revendications précédentes, comprenant les étapes :
- de préchauffage du milieu de travail par couplage thermique à un flux de gaz d'échappement recyclés (12) du système de gaz d'échappement ;
- d'évaporation du milieu de travail par couplage thermique au flux de gaz d'échappement recyclés (12) et à un flux de gaz d'échappement résiduels (13) du système de gaz d'échappement ;
- de surchauffage du milieu de travail par couplage thermique au flux de gaz d'échappement recyclés (12), **caractérisé en ce que** le flux de gaz d'échappement résiduels (13) est couplé seulement à la zone d'évaporation (5) du milieu de travail.

9. Procédé selon la revendication 8, **caractérisé en ce que** le flux de gaz d'échappement recyclés (12) passant par les étapes successives de surchauffage / d'évaporation /de préchauffage est placé en échange thermique avec le milieu de travail.

10. Procédé selon la revendication 8 ou 9, **caractérisé en ce que**, dans au moins l'une des zones de surchauffage ou de préchauffage du milieu de travail, en particulier dans les deux zones, il se produit un couplage thermique seulement avec le flux de gaz d'échappement recyclés (12).
